(19) **Europäisches Patentamt / European Patent Office / Office européen des brevets**

(11) **EP 2 299 443 A1**

(12) **EUROPEAN PATENT APPLICATION**
published in accordance with Art. 153(4) EPC

(43) Date of publication:
**23.03.2011 Bulletin 2011/12**

(51) Int Cl.:
***G11B 7/09*** *(2006.01)*

(21) Application number: **08800802.4**

(22) Date of filing: **08.09.2008**

(86) International application number:
**PCT/CN2008/072290**

(87) International publication number:
**WO 2010/003294 (14.01.2010 Gazette 2010/02)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **09.07.2008 CN 200810012233**

(71) Applicant: **China Hualu Panasonic Avc Networks Co., Ltd**
**Dalian, Liaoning 116023 (CN)**

(72) Inventors:
• **ZHANG, Yong**
  **Dalian**
  **Liaoning 116023 (CN)**
• **GUO, Youli**
  **Dalian**
  **Liaoning 116023 (CN)**
• **WANG, Xiuyu**
  **Dalian**
  **Liaoning 116023 (CN)**
• **WU, Yingxiong**
  **Dalian**
  **Liaoning 116023 (CN)**
• **SONG, Liang**
  **Dalian**
  **Liaoning 116023 (CN)**
• **MA, Zheng**
  **Dalian**
  **Liaoning 116023 (CN)**

(74) Representative: **Chaillot, Geneviève**
**Cabinet Chaillot**
**16-20 Avenue de l'Agent Sarre**
**B.P. 74**
**92703 Colombes Cedex (FR)**

(54) **TRACKING SERVO METHOD OF OPTICAL VIDEO DISC PLAYER AND ITS SPECIAL DEVICE**

(57) A tracking servo method of an optical video disc player and its special device which accomplish angle adjustment in a simple, time-saving and effort-saving manner and improve the tracking servo capability of the optical video disc player. In the tracking servo method of an optical video disc player, a laser beam is split into a main beam and two sub beams, and tracking error signal generated from the two sub beams are subtracted from tracking error signal generated by the main beam; light spot of the main beam is circular in shape, and light spots of the two sub beams are elliptical in shape. The special device has an effective grating region (1). The effective grating region (1) has a middle zone (2) and two side zones (3, 4); the middle zone (2) has two side edges which are parallel and equal in length, and the two side edges has a distance therebetween which is 10-90% of diameter of the effective grating region (1), and the middle zone (2) and the two side zones (3, 4) have different grating pitches.

FIG.9

## Description

Technical Field

The present invention belongs to the field of optical video disc players and more particularly pertains to a tracking servo method of an optical video disc player and its special device that improve the tracking servo capability of optical video disc players.

Background Art

The tracking servo method of present optical video disc players is basically differential push-pull method (DPP). A laser beam is first split into 3 beams (a main beam and two sub beams) with a grating. The split beams are transmitted through beam splitting prism, objective lens and so forth and then reflected towards the disc track. By means of adjusting the angles between the three beams and the disc track, the signals generated by the light spot of the main beam and the light spots of the two sub beams are opposite to each other in phase. The tracking servo error signal generated by the light spot of the main beam is called MPP. The tracking servo error signal generated by the light spots of the two sub beams is called SPP. For both the MPP and the SPP, the useful AC components overlap with the unnecessary DC components. As the AC components of the MPP and the SPP are opposite in phase, the unnecessary DC components would be offset and the useful AC components would be summed up after subtracting the SPP from the MPP in accordance with the DPP method. When reading an eccentric disc, the DC component of the MPP and the DC component of the SPP would vary. In order to eliminate the variation in the DC components of the tracking servo error signals, the overall tracking servo error signal DPP = MPP - K * SPP, wherein K = variation in the DC component of MPP / variation in the DC component of SPP. In the present tracking servo devices, the effective grating regions have equal grating pitch, and so the light spots of the main beam and the sub beams formed are circular in shape. When the optical disc is tilted or the objective lens is shifted, the angle between the three beams and the disc track would then be changed and therefore result in deviation, and the AC component of the SPP and the AC component of the MPP are the same or similar in phase. After the SPP is subtracted from the MPP, the DPP value becomes basically 0, and the tracking servo could no longer continue tracking, leading to a lower servo capability. The tracking servo capability of a video disc player could only be improved by means of precise optical adjustment, yet such adjustment of the angle is complex, time consuming as well as difficult to operate.

Disclosure of the Invention

In order to overcome the problem of poor servo capability in the prior art, the present invention provides a tracking servo method of an optical video disc player and a special device thereof, which accomplish angle adjustment in a simple, time-saving and effort-saving manner and improve the tracking servo capability of the optical video disc player.

The technical solution of the present invention is: a tracking servo method of an optical video disc player, wherein a laser beam is split into a main beam and two sub beams, and tracking error signal generated from the two sub beams are subtracted from tracking error signal generated by the main beam, characterized in that light spot of the main beam is circular in shape, and light spots of the two sub beams are elliptical in shape.

A special device for the tracking servo method of an optical video disc player which has an effective grating region 1, and the effective grating region 1 has a middle zone 2 and two side zones 3, 4; the middle zone 2 has two side edges which are parallel and equal in length, and the two side edges has a distance therebetween which is 10-90% of diameter of the effective grating region 1, and the middle zone 2 and the two side zones 3, 4 have different grating pitches.

The distance between the two side edges of the middle zone 2 is 40-60% of the diameter of the effective grating region 1. The middle zone 2 has a larger grating pitch than the two side zones 3, 4, and the two side zones 3, 4 have equal grating pitch.

The present invention splits a light spot emitted by a laser emitting device into a circular light spot of the main beam and two elliptical light spots of the sub beams. For both the MPP signal generated by the light spot of the main beam and the ESPP tracking error signal generated by the light spots of the two sub beams, the AC signals overlap with the DC signals; however, for the ESPP, the AC signal is small and the DC signal remains unchanged. After subtracting the ESPP from the MPP, the useless DC signals are offset and the useful AC signal is basically the AC signal of the MPP. Therefore, even if deviation occurs due to a change in the angle between the three light beams and the disc track caused by tilting of the disc or shifting of the objective lens, the resulting tracking servo error value EDPP (EDPP = MPP - K * ESPP) is almost unchanged. The tracking servo remains unaffected, thus improving the tracking servo capability of the optical video disc player and ensuring the quality of the product. Also, since the requirement of the angle accuracy is not high, the angle adjustment could be accomplished in a simple, time-saving and effort-saving manner. The device used is simple in structure and easy to manufacture.

Brief Description of Drawings

Fig. 1 is a diagram showing the light spots of the embodiment of the present invention under normal adjustment.

Fig. 2 is a diagram showing the waveform of the MPP of the embodiment of the present invention under normal adjustment.

Fig. 3 is a diagram showing the waveform of the ESPP of the embodiment of the present invention under normal adjustment.

Fig. 4 is a diagram showing the waveform of the EDPP of the embodiment of the present invention under normal adjustment.

Fig. 5 is a diagram showing the light spots of the embodiment of the present invention when deviation occurs during adjustment.

Fig. 6 is a diagram showing the waveform of the MPP of the embodiment of the present invention when deviation occurs during adjustment.

Fig. 7 is a diagram showing the waveform of the ESPP of the embodiment of the present invention when deviation occurs during adjustment.

Fig. 8 is a diagram showing the waveform of the EDPP of the embodiment of the present invention when deviation occurs during adjustment.

Fig. 9 is a diagram showing the structure of the special device of the embodiment of the present invention.

Best Mode for Carrying out the Invention

The embodiment of the present invention will be described below with reference to the accompanying figures.

A tracking servo method of an optical video disc player, wherein a laser beam is split into a main beam and two sub beams, and tracking error signal generated from the two sub beams are subtracted from tracking error signal generated by the main beam, characterized in that light spot of the main beam is circular in shape, and light spots of the two sub beams are elliptical in shape.

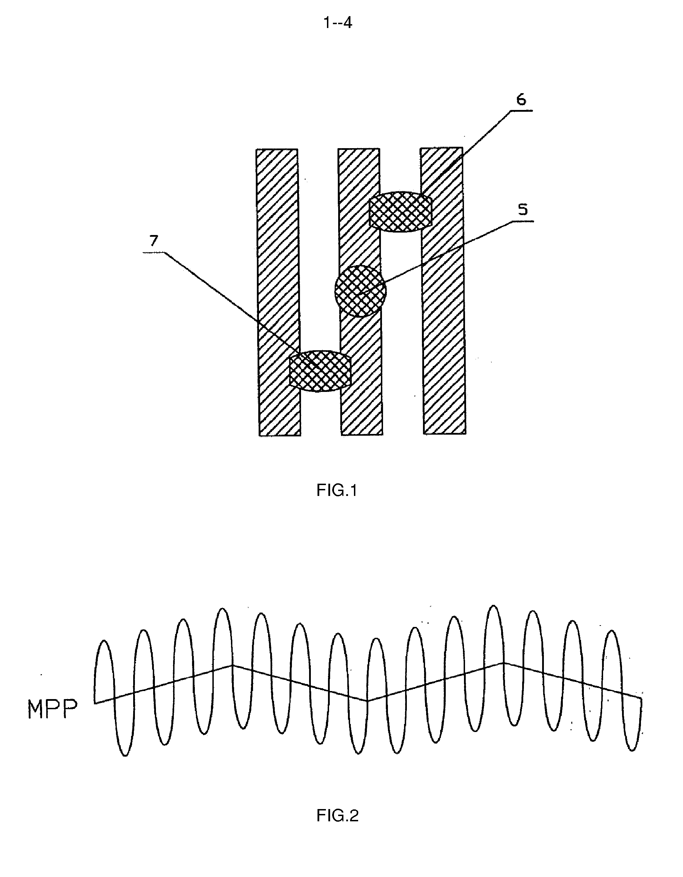

The light spots under normal adjustment are as shown in fig. 1. Since the light spots of the useful sub beams are elliptical in shape, the vertical and horizontal numerical apertures of the light spots are different when they are incident on the objective lens. According to the definition:

Focal diameter:

$$ D = K \frac{\lambda}{NA} $$

Where: D --- is the diameter of the light spot
K --- is a constant
λ--- is the wavelength
NA --- is the numerical aperture

For an elliptical light spot, the numerical aperture of the light spot along its longer axis is large and so the light converging power is strong, and the diameter of the light spot is small; the numerical aperture of the light spot along its shorter axis is small and so the light converging power is weak, and the diameter of the light spot is large. Therefore, the focus as formed is also elliptical in shape, but with the longer and shorter axis interchanged in direction.

When emitting laser to a disc, the light spot of the main beam 5 and the light spots of the sub beams 6, 7 are projected on the disc track, with the longer axis of the elliptical light spots of the sub beams 6, 7 being perpendicular to the direction of the track.

The waveforms of the MPP, ESPP and EDPP generated are shown in Fig. 2, Fig. 3 and Fig. 4 respectively. For both the MPP signal generated by the light spot of the main beam and the ESPP tracking error signal generated by the light spots of the two sub beams, the AC signals overlap with the DC signals; however, for the ESPP, the AC signal is small and the DC signal remains unchanged. After subtracting the ESPP from the MPP, the useless DC signals are offset and the useful AC signal is basically the AC signal of the MPP.

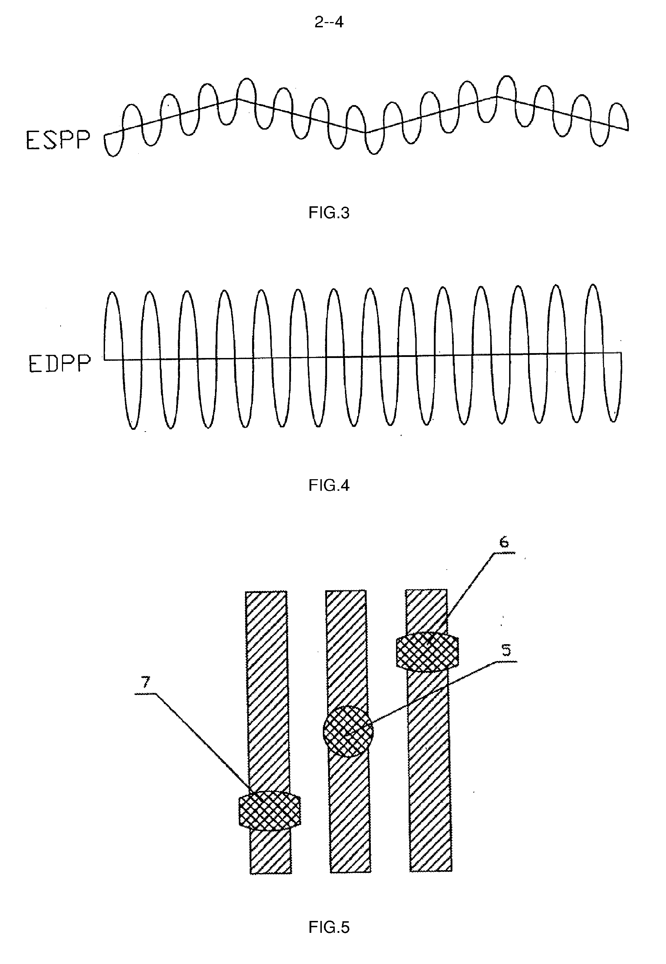

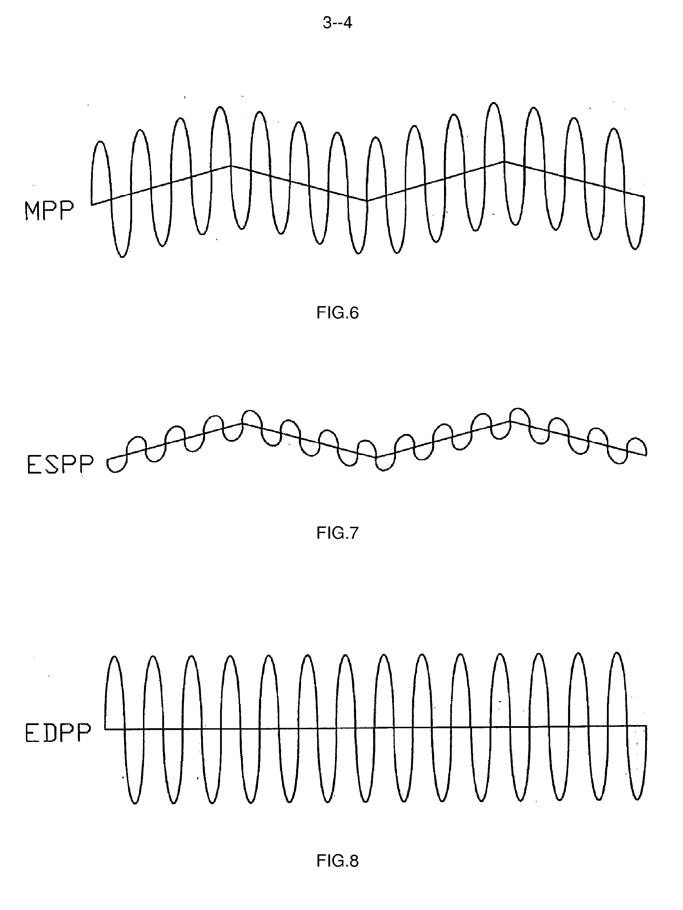

Fig. 5 shows the lights spots when deviation occurs due to a change in the angle between the three light beams and the disc track caused by tilting of the disc or shifting of the objective lens. The waveforms of the MPP, ESPP and EDPP generated are shown in Fig. 6, Fig. 7 and Fig. 8 respectively. There is no change in the DC component and the AC component of the MPP signal generated by the main beam. The AC signal of the tracking servo error signal ESPP generated by the light spots of the sub beams has a small variation in amplitude and the DC signal remains unchanged. Therefore, after subtracting the ESPP from the MPP, the useless DC signals are offset and the useful AC signal is basically the AC signal of the MPP. The tracking servo remains unaffected, thus improving the tracking servo capability of the optical video disc player and ensuring the quality of the product.

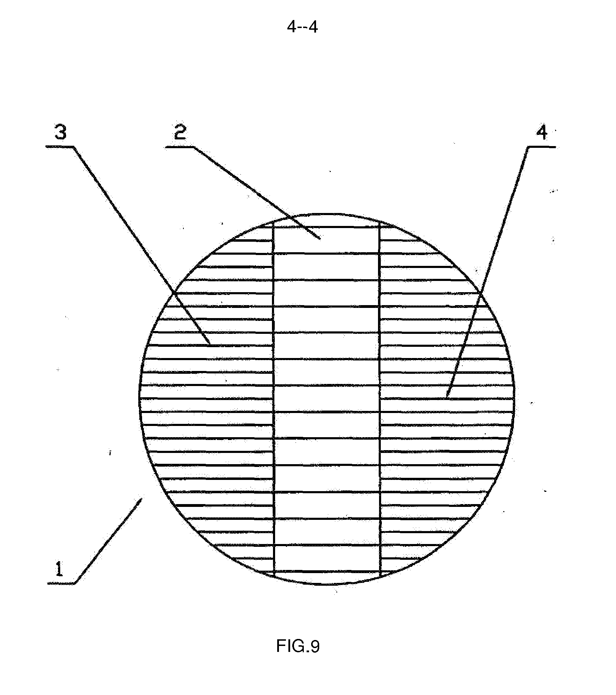

The special device of the embodiment of the present invention as illustrated in Fig. 9 is a grating with special structure. It has an effective grating region 1, and the effective grating region 1 has a middle zone 2 and two side zones 3, 4; the middle zone 2 has two side edges which are parallel and equal in length, and the two side edges has a distance therebetween which is 10-90% of diameter of the effective grating region 1, and the middle zone 2 and the two side zones 3, 4 have different grating pitches.

The distance between the two side edges of the middle zone 2 is 40-60% of the diameter of the effective grating region 1. The middle zone 2 has a larger grating pitch than the two side zones 3, 4, and the two side zones 3, 4 have equal grating pitch.

According to the principle of diffraction gratings, a small grating pitch has a large diffraction angle and the sub beams would be diffracted to an area farther away from the main beam; on the other hand, a large grating pitch has a small diffraction angle and the sub beams would be diffracted to an area nearer to the main beam. The grating pitch could be determined based on the distances of the light reception surfaces of the main beam and the sub beams. In the embodiment of the present invention as shown in Fig. 1, the middle zone 2 and the two side zones 3, 4 have different grating pitches. After diffracting from such grating, the light spot of the main beam remains to be circular in shape, but the light spots of the two sub beams as diffracted from the middle zone 2 are elliptical in shape, and the diffracted light spots from the two side zones are not considered since they are not used.

**Claims**

1.  A tracking servo method of an optical video disc player, wherein a laser beam is split into a main beam and two sub beams, and tracking error signal generated from the two sub beams are subtracted from tracking error signal generated by the main beam, **characterized in that** light spot of the main beam is circular in shape, and light spots of the two sub beams are elliptical in shape.

2.  A special device for the tracking servo method of an optical video disc player as in Claim 1 which has an effective grating region (1), **characterized in that** the effective grating region (1) has a middle zone (2) and two side zones (3), (4); the middle zone (2) has two side edges which are parallel and equal in length, and the two side edges has a distance therebetween which is 10-90% of diameter of the effective grating region (1), and the middle zone (2) and the two side zones (3), (4) have different grating pitches.

3.  The special device for the tracking servo method of an optical video disc player as in Claim 2, **characterized in that** the distance between the two side edges of the middle zone (2) is 40-60% of the diameter of the effective grating region (1), and the middle zone (2) has a larger grating pitch than the two side zones (3), (4), and the two side zones (3), (4) have equal grating pitch.

1--4

FIG.1

FIG.2

2--4

ESPP

FIG.3

EDPP

FIG.4

FIG.5

3--4

FIG.6

FIG.7

FIG.8

4--4

FIG.9

# INTERNATIONAL SEARCH REPORT

| International application No. |
|---|
| PCT/CN2008/072290 |

**A. CLASSIFICATION OF SUBJECT MATTER**

G11B 7/09 (2006.01) i

According to International Patent Classification (IPC) or to both national classification and IPC

**B. FIELDS SEARCHED**

Minimum documentation searched (classification system followed by classification symbols)

IPC: G11B 7/09-, G11B 7/135, G02B 5/18; FT: 5D118/CG18, 5D118/CG04, 5D118/CD03

Documentation searched other than minimum documentation to the extent that such documents are included in the fields searched

Electronic data base consulted during the international search (name of data base and, where practicable, search terms used)

CNPAT, CNKI, WPI, PAJ, EPODOC: CD, DVD, optical, disc?, disk?, head, pick up, pickup, media, main beam, sub beam?, side beam?, main light beam, sub light beam?, branch light beam?, tracking servo, spot?, elliptical, elliptic, diffraction grating, different

**C. DOCUMENTS CONSIDERED TO BE RELEVANT**

| Category* | Citation of document, with indication, where appropriate, of the relevant passages | Relevant to claim No. |
|---|---|---|
| X | CN 1702747 A (MITSUMI ELECTRIC CO LTD) 30 Nov. 2005 (30.11.2005) page 3,line 23-page 4,line 3 & page 4,line 27-page 5,line 2 of the specification & Fig. 8 | 1 |
| A | the whole document | 2,3 |
| A | CN 1905025A (SHARP KK) 31 Jan. 2007 (31.01.2007) the whole document, Figs. 2-4, 8-15 | 1-3 |
| A | CN 101140772A (MATSUSHITA ELECTRIC IND CO LTD) 12 Mar. 2008 (12.03.2008) the whole document | 1-3 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 Apr. 2009 (03.04.2009) | **23 Apr. 2009 (23.04.2009)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **WU,Xinghua** Telephone No. (86-10)62411371 |
|---|---|

Form PCT/ISA/210 (second sheet) (April 2007)

**INTERNATIONAL SEARCH REPORT**

| International application No. |
| --- |
| PCT/CN2008/072290 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | CN 1653527A (SHARP KK) 10 Aug. 2005 (10.08.2005)<br><br>  page 14,line 25-page 15,line 4 of the specification | 1-3 |
| A | CN 1838271A (MATSUSHITA ELECTRIC IND CO LTD) 27 Sep. 2006 (27.09.2006)<br><br>the whole document | 1-3 |

Form PCT/ISA/210 (continuation of second sheet ) (April 2007)

## INTERNATIONAL SEARCH REPORT
Information on patent family members

| International application No. |
|---|
| PCT/CN2008/072290 |

| Patent Documents referred in the Report | Publication Date | Patent Family | Publication Date |
|---|---|---|---|
| CN 1702747 A | 30.11.2005 | EP 1600958 A2 | 30.11.2005 |
| | | JP 2005339646 A | 08.12.2005 |
| | | US 2005265203 A1 | 01.12.2005 |
| CN 1905025 A | 31.01.2007 | US 2007053270 A1 | 08.03.2007 |
| | | JP 2007035193 A | 08.02.2007 |
| CN 101140772 A | 12.03.2008 | US 2008062825 A1 | 13.03.2008 |
| | | JP 2008091007 A | 17.04.2008 |
| CN 1653527 A | 10.08.2005 | WO 03091999 A1 | 06.11.2003 |
| | | JP 2004005892 A | 08.01.2004 |
| | | KR 20050005457 A | 13.01.2005 |
| | | US 2005180293 A1 | 18.08.2005 |
| | | US 7184384 B2 | 27.02.2007 |
| | | JP 3977234 B2 | 19.09.2007 |
| | | KR 100670865 B1 | 19.01.2007 |
| CN 1838271 A | 27.09.2006 | US 2006215508 A1 | 28.09.2006 |
| | | JP 2006268974 A | 05.10.2006 |
| | | KR 20060103117 A | 28.09.2006 |

Form PCT/ISA/210 (patent family annex) (April 2007)